(19) Europäisches Patentamt
European Patent Office
Office européen des brevets

(11) **EP 4 535 449 A1**

(12) **EUROPEAN PATENT APPLICATION**
published in accordance with Art. 153(4) EPC

(43) Date of publication:
**09.04.2025 Bulletin 2025/15**

(21) Application number: **22949772.2**

(22) Date of filing: **06.07.2022**

(51) International Patent Classification (IPC):
**H01M 4/133** (2010.01)

(52) Cooperative Patent Classification (CPC):
**H01M 4/133; Y02E 60/10**

(86) International application number:
**PCT/CN2022/104059**

(87) International publication number:
**WO 2024/007184 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• **FENG, Pengyang
Ningde, Fujian 352100 (CN)**
• **TANG, Jia
Ningde, Fujian 352100 (CN)**

(74) Representative: **Icosa
83 avenue Denfert-Rochereau
75014 Paris (FR)**

(54) **SECONDARY BATTERY AND ELECTRONIC APPARATUS**

(57) A secondary battery is provided. The secondary battery includes a negative electrode. The negative electrode includes a negative electrode current collector and a negative electrode active material layer disposed on the negative electrode current collector, and the negative electrode active material layer includes graphite particles. In a thickness direction of the negative electrode active material layer, a region from a surface of the negative electrode active material layer to 10 μm inside the negative electrode active material layer is a first region. The secondary battery satisfies $3 \leq m1/n1 \leq 18$ and $5\% \leq n1 \leq 20\%$, where m1 represents a proportion of graphite particles in the first region, with a longest diameter of the graphite particle having an included angle of 0° to 20° with a direction of the negative electrode current collector, and n1 represents a cross-sectional porosity of the first region. The secondary battery of this application has both high energy density and excellent rate performance. An electronic apparatus including such secondary battery is also provided.

FIG. 1

EP 4 535 449 A1

## Description

### TECHNICAL FIELD

This application relates to the field of energy storage, and specifically, to a secondary battery and an electronic apparatus.

### BACKGROUND

In recent years, with the rapid development of electronic products and electric vehicles, increasingly high requirements are imposed on secondary batteries. Especially, secondary batteries are required to have both high energy density and fast charging capability. A lithium-ion battery is used as an example. Natural graphite with high gram capacity is generally used as the negative electrode material, but natural graphite is soft, so the negative electrode has decreased surface porosity after rolling, which leads to deteriorated ion conduction and reduced infiltration performance, thereby affecting the rate performance and the like of the lithium-ion battery.

### SUMMARY

In view of deficiencies of the prior art, this application provides a secondary battery and an electronic apparatus including such secondary battery. The secondary battery of this application has both high energy density and excellent rate performance.

According to a first aspect, this application provides a secondary battery including a negative electrode, where the negative electrode includes a negative electrode current collector and a negative electrode active material layer disposed on the negative electrode current collector, and the negative electrode active material layer includes graphite particles, where in a thickness direction of the negative electrode active material layer, a region from a surface of the negative electrode active material layer to 10 $\mu$m inside the negative electrode active material layer is a first region, the secondary battery satisfying $3 \leq m1/n1 \leq 18$ and $5\% \leq n1 \leq 20\%$, where m1 represents a proportion of graphite particles in the first region, with a longest diameter of the graphite particle having an included angle of 0° to 20° with a direction of the negative electrode current collector, and n1 represents a cross-sectional porosity of the first region. The inventors of this application have found through research that during pressing of the secondary battery, the graphite particles in the first region of the negative electrode active material layer are in direct contact with a roller applying pressure. However, conventional natural graphite is soft and is prone to over-compression under pressure, which in turn leads to decreased porosity in the first region and affects infiltration of an electrolyte, thereby affecting internal kinetic performance of the secondary battery. A certain included angle between the graphite particles and the current collector can ensure sufficiently short transport paths for active ions, facilitating intercalation of active ions. In addition, an appropriate porosity can maximize energy density of the secondary battery.

According to some embodiments of this application, the secondary battery satisfies $5 \leq m1/n1 \leq 12$ and/or $7\% \leq n1 \leq 15\%$. m1/n1 and/or n1 satisfying the foregoing range can further control porosity of the negative electrode active material layer and shorten the transport paths for active ions, thereby increasing the energy density of the secondary battery and improving rate performance of the secondary battery.

According to some embodiments of this application, $60\% \leq m1 \leq 90\%$. m1 falling within the foregoing range can shorten the transport paths for active ions and improve infiltration of the electrolyte, thereby improving the rate performance of the secondary battery and increasing the energy density of the secondary battery.

According to some embodiments of this application, $65\% \leq m1 \leq 85\%$. This can further shorten the transport paths for active ions and improve infiltration of the electrolyte, thereby improving the rate performance of the secondary battery and increasing the energy density of the secondary battery.

According to some embodiments of this application, the longest diameter of the graphite particle in the first region is 20 $\mu$m to 40 $\mu$m. The longest diameter of the graphite particle in the first region falling within the foregoing range facilitates intercalation and deintercalation of active ions and allows the active material layer to have an appropriate porosity, thereby further improving the rate performance of the secondary battery and increasing the energy density of the secondary battery.

According to some embodiments of this application, the longest diameter of the graphite particle in the first region is 20 $\mu$m to 30 $\mu$m. The longest diameter of the graphite particle in the first region falling within the foregoing range further facilitates intercalation and deintercalation of active ions and ensures an appropriate porosity of the active material layer, thereby effectively improving the rate performance of the secondary battery and increasing the energy density of the secondary battery.

According to some embodiments of this application, in the thickness direction of the negative electrode active material layer, a region other than the first region is a second region, the secondary battery satisfying $1 \leq m2/n2 \leq 5$ and 40%

$\leq$ m2 $\leq$ 70%, where m2 represents a proportion of graphite particles in the second region, with a longest diameter of the graphite particle having an included angle of 0° to 20° with the direction of the negative electrode current collector, and n2 represents a cross-sectional porosity of the second region. The second region is less affected by rolling than the first region, so the second region has a slightly higher porosity than the first region, and the graphite particles are more likely to be arranged in a direction perpendicular to the current collector, which in turn facilitates infiltration of the electrolyte and transport of active ions, thereby further improving the rate performance of the secondary battery and increasing the energy density of the secondary battery.

According to some embodiments of this application, the secondary battery satisfies 2 $\leq$ m2/n2 $\leq$ 4 and/or 45% $\leq$ m2 $\leq$ 65%. When m2/n2 and/or m2 satisfies the foregoing range, the negative electrode active material layer further facilitates transport of active ions and has an appropriate porosity, reducing internal impedance of the battery, thereby effectively improving the rate performance of the secondary battery and increasing the energy density of the secondary battery.

According to some embodiments of this application, 10% $\leq$ n2 $\leq$ 50%. n2 falling within the foregoing range can improve infiltration of the electrolyte and transport of active ions, and allows the negative electrode active material layer to have an appropriate porosity, thereby improving the rate performance of the secondary battery.

According to some embodiments of this application, 20% $\leq$ n2 $\leq$ 40%. This can further facilitate transport of active ions and improve infiltration of the electrolyte, thereby improving the rate performance of the secondary battery and increasing the energy density of the secondary battery.

According to some embodiments of this application, the longest diameter of the graphite particle in the second region is 5 $\mu$m to 25 $\mu$m. The longest diameter of the graphite particle in the second region falling within the foregoing range facilitates intercalation and deintercalation of active ions and allows the active material layer to have an appropriate porosity, thereby further improving the rate performance of the secondary battery and increasing the energy density of the secondary battery.

According to some embodiments of this application, the longest diameter of the graphite particle in the second region is 5 $\mu$m to 20 $\mu$m. This further facilitates intercalation and deintercalation of active ions, thereby improving the rate performance of the secondary battery.

According to some embodiments of this application, the negative electrode satisfies at least one of the following conditions (a) to (d): (a) a longest diameter of the graphite particle in the negative electrode active material layer is 5 $\mu$m to 40 $\mu$m; (b) a compacted density of the negative electrode active material layer is 1.0 g/cm$^3$ to 1.5 g/cm$^3$; (c) a single-sided thickness of the negative electrode active material layer is 30 $\mu$m to 80 $\mu$m; or (d) a single-sided weight of the negative electrode active material layer is 0.03 mg/mm$^2$ to 0.12 mg/mm$^2$.

According to some embodiments of this application, the longest diameter of the graphite particle in the negative electrode active material layer is 5 $\mu$m to 40 $\mu$m. The longest diameter of the graphite particle in the negative electrode active material layer falling within the foregoing range can shorten the transport paths for active ions and improve infiltration of the electrolyte, thereby improving the internal kinetic performance of the secondary battery. In addition, this ensures an appropriate porosity of the active material layer, thereby improving the rate performance of the secondary battery and increasing the energy density of the secondary battery.

According to some embodiments of this application, the longest diameter of the graphite particle in the negative electrode active material layer is 5 $\mu$m to 30 $\mu$m. In this case, the negative electrode active material layer further facilitates transport of active ions and has an appropriate porosity, and thus the secondary battery has higher energy density and better rate performance.

According to some embodiments of this application, the compacted density of the negative electrode active material layer is 1.0 g/cm$^3$ to 1.5 g/cm$^3$. When the compacted density falls within the foregoing range, the first region and the second region have appropriate porosities, which in turn facilitates infiltration of the electrolyte and intercalation and deintercalation of active ions, allowing the secondary battery to have high energy density and excellent rate performance.

According to some embodiments of this application, the single-sided thickness of the negative electrode active material layer is 30 $\mu$m to 80 $\mu$m. The single-sided thickness of the negative electrode active material layer falling within the foregoing range not only is conducive to improving fast charging performance of the secondary battery but also can ensure high volumetric energy density.

According to some embodiments of this application, the single-sided weight of the negative electrode active material layer is 0.03 mg/mm$^2$ to 0.12 mg/mm$^2$. The single-sided weight of the negative electrode active material layer falling within the foregoing range can reduce resistance during intercalation and deintercalation of active ions and shorten the transport paths for ions, and allows the active material layer to have an appropriate porosity, thereby improving the rate performance of the secondary battery and increasing the energy density of the secondary battery.

According to some embodiments of this application, the graphite includes natural graphite.

According to some embodiments of this application, the natural graphite satisfies at least one of the following conditions (e) to (h): (e) the natural graphite includes primary particles; (f) $D_v50$ of the natural graphite is 4 $\mu$m to 25 $\mu$m; (g) a powder compacted density of the natural graphite is 1.7 g/cm$^3$ to 2.05 g/cm$^3$; or (h) a specific surface area of the natural graphite is 3 m²/g to 6 m²/g. According to some embodiments of this application, $D_v50$ of the natural graphite is 4 μm to 25 μm. The particle size of the natural graphite falling within the foregoing range facilitates intercalation and deintercalation of active ions, improving the internal kinetic performance of the secondary battery, thereby improving the rate performance of the secondary battery.

According to some embodiments of this application, the powder compacted density of the natural graphite is 1.7 g/cm³ to 2.05 g/cm³. The powder compacted density falling within the foregoing range can not only ensure high energy density of the secondary battery but also maintain good kinetic performance, thereby improving the rate performance of the secondary battery.

According to some embodiments of this application, the specific surface area of the natural graphite is 3 m²/g to 6 m²/g. Controlling the specific surface area within the foregoing range can not only reduce consumption caused by film forming of active ions on the surface, but also maintain a good infiltration speed of the electrolyte, thereby further improving the rate performance of the secondary battery and increasing the energy density of the secondary battery.

According to some embodiments of this application, an electrolyte infiltration time of the negative electrode active material layer is ≤ 70s. This indicates that the electrolyte has a good infiltration effect on the negative electrode active material layer, improving the internal kinetic performance of the secondary battery, thereby improving the rate performance of the secondary battery.

According to a second aspect, this application provides an electronic apparatus including the secondary battery according to the first aspect.

The negative electrode of the secondary battery provided in this application includes a specific negative electrode active material layer, allowing the secondary battery to have both high energy density and excellent rate performance.

## BRIEF DESCRIPTION OF DRAWINGS

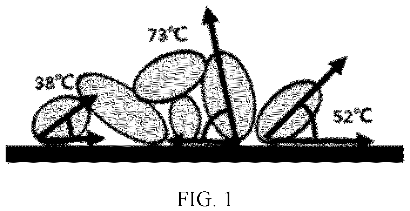

FIG. 1 is a schematic diagram of included angles between longest diameters of graphite particles and a direction of a negative electrode current collector.

## DESCRIPTION OF EMBODIMENTS

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual numerical value may itself be a lower limit or an upper limit which can be combined with any other point or individual numerical value or combined with another lower limit or upper limit to form a range not expressly recorded.

In the description of this specification, unless otherwise specified, "more than" and "less than" are inclusive of the present number.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

A list of items connected by the terms "at least one of", "at least one piece of", and "at least one kind of" or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

The following further describes this application with reference to specific embodiments. It should be understood that these specific embodiments are merely intended to illustrate this application but not to limit the scope of this application.

I. Secondary battery

According to a first aspect, this application provides a secondary battery, including a negative electrode, where the negative electrode includes a negative electrode current collector and a negative electrode active material layer disposed on the negative electrode current collector, and the negative electrode active material layer includes graphite particles, where in a thickness direction of the negative electrode active material layer, a region from a surface of the negative electrode active material layer to 10 μm inside the negative electrode active material layer is a first region, the secondary battery satisfying $3 \leq m1/n1 \leq 18$ and $5\% \leq n1 \leq 20\%$, where m1 represents a proportion of graphite particles in the first region, with a longest diameter of the graphite particle having an included angle of 0° to 20° with a direction of the negative electrode current collector, and n1 represents a cross-sectional porosity of the first region. The inventors of this application have found through research that during pressing of the secondary battery, the graphite particles in the first region of the negative electrode active material layer are in direct contact with a roller applying pressure. However, conventional natural graphite is soft and is prone to over-compression under pressure, which in turn leads to decreased porosity in the first region and affects infiltration of an electrolyte, thereby affecting internal kinetic performance of the secondary battery. A certain included angle between the graphite particles and the current collector can ensure sufficiently short transport paths for active ions, facilitating intercalation of active ions. In addition, an appropriate porosity can maximize volumetric energy density of the secondary battery.

In this application, the "surface of the negative electrode active material layer" is a surface of the negative electrode active material layer away from the current collector.

According to some embodiments of this application, m1/n1 is 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, or within a range defined by any two of these values. According to some embodiments of this application, $5 \leq m1/n1 \leq 12$. m1/n1 satisfying the foregoing range can shorten the transport paths for active ions, and facilitates intercalation of active ions and infiltration of the electrolyte, improving the internal kinetic performance of the secondary battery, thereby improving rate performance of the secondary battery.

According to some embodiments of this application, the cross-sectional porosity n1 of the first region is 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or within a range defined by any two of these values. According to some embodiments of this application, $7\% \leq n1 \leq 15\%$. The cross-sectional porosity falling within the foregoing range can shorten the transport paths for active ions, facilitating intercalation of active ions and infiltration of the electrolyte. In addition, an appropriate porosity can maximize the volumetric energy density of the secondary battery.

In this application, the "cross-sectional porosity" is a porosity of a sectional (that is, cross-sectional) region of the negative electrode active material layer in a direction perpendicular to the negative electrode current collector.

According to some embodiments of this application, $60\% \leq m1 \leq 90\%$. In this application, "m1" is a quantity percentage. In some embodiments, m1 is 63%, 65%, 67%, 69%, 70%, 73%, 75%, 77%, 79%, 80%, 83%, 85%, 87%, 89%, or within a range defined by any two of these values. According to some embodiments of this application, $65\% \leq m1 \leq 85\%$. When m1 is excessively high, the porosity of the first region is low, which blocks lithium intercalation channels for active ions, and in turn increases impedance of the secondary battery and intensifies side reactions, resulting in higher consumption of active ions, and affecting the rate performance of the secondary battery, thereby accordingly reducing the volumetric energy density of the secondary battery. When m1 is excessively low, the porosity of the first region is high, which increases contact area between the electrolyte and an active material, and in turn leads to side reactions between the electrolyte and the active material, increasing consumption of the electrolyte. When m1 falls within the foregoing range, the secondary battery has better rate performance and higher volumetric energy density.

According to some embodiments of this application, the longest diameter of the graphite particle in the first region is 20 $\mu$m to 40 $\mu$m. In some embodiments, the longest diameter of the graphite particle is 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, 31 $\mu$m, 32 $\mu$m, 33 $\mu$m, 34 $\mu$m, 35 $\mu$m, 36 $\mu$m, 37 $\mu$m, 38 $\mu$m, 39 $\mu$m, or within a range defined by any two of these values. According to some embodiments of this application, the longest diameter of the graphite particle in the first region is 20 $\mu$m to 30 $\mu$m. The longest diameter of the graphite particle falling within the foregoing range facilitates transport of active ions and allows the active material layer to have an appropriate porosity, thereby further improving the rate performance of the secondary battery and increasing the energy density of the secondary battery.

In this application, the "longest diameter of the graphite particle" is the longest distance between any two points on the graphite particle in the field of view when a CP sample of the negative electrode active material layer is observed using a scanning electron microscope (SEM). In this application, the cross-sectional porosity and the included angle between the longest diameter of the graphite particle and the direction of the negative electrode current collector can be adjusted by selecting the type of graphite particle raw materials such as soft/hard raw materials, granulating/shaping graphite particle raw materials, or controlling cold pressing pressure during manufacturing of an electrode plate. Specifically, the included angle between the longest diameter of the graphite particle and the direction of the negative electrode current collector and the cross-sectional porosity of the negative electrode active material layer can be adjusted in the following manners: selecting the type of graphite particle raw materials such as soft/hard raw materials, for example, the graphite raw materials with a smaller OI value are more difficult to compress, which are manifested as hard raw materials, and the value of m is smaller; granulating/shaping graphite particle raw materials, for example, a higher content of binder for granulation means that the finished graphite particles are more difficult to compress and the value of m is smaller; or controlling cold pressing pressure during manufacturing of an electrode plate, for example, a greater cold pressing pressure means that the graphite particles are more likely to be arranged parallel to the current collector, that is, the value of m is larger.

According to some embodiments of this application, in the thickness direction of the negative electrode active material layer, a region other than the first region is a second region, the secondary battery satisfying $1 \leq m2/n2 \leq 5$ and $40\% \leq m2 \leq 70\%$, where m2 represents a proportion of graphite particles in the second region, with a longest diameter of the graphite particle having an included angle of 0° to 20° with the direction of the negative electrode current collector, and n2 represents a cross-sectional porosity of the second region. The second region is less affected by rolling than the first region, so the second region has a slightly higher cross-sectional porosity than the first region, and the graphite particles in the second region are more likely to be arranged in a direction perpendicular to the current collector, which in turn facilitates infiltration of the electrolyte and transport of active ions, thereby further improving the rate performance of the secondary battery and increasing the energy density of the secondary battery.

According to some embodiments of this application, m2/n2 is 1.5, 2, 2.5, 3, 3.5, 4, 4.5, or within a range defined by any two of these values. In some embodiments, m2 is 43%, 45%, 47%, 49%, 50%, 53%, 55%, 57%, 59%, 60%, 63%, 65%, 67%, 69%, or within a range defined by any two of these values. According to some embodiments of this application, $2 \leq m2/n2 \leq 4$. According to some embodiments of this application, $45\% \leq m2 \leq 65\%$. m2/n2 and m2 falling within the foregoing ranges can improve infiltration of the electrolyte and transport of active ions, and allows the active material layer to have an appropriate porosity, thereby improving the rate performance of the secondary battery and increasing the energy density of the secondary battery. In this application, m2 is a quantity percentage.

According to some embodiments of this application, $10\% \leq n2 \leq 50\%$. In some embodiments, n2 is 10%, 12%, 15%, 16%, 18%, 20%, 22%, 25%, 27%, 29%, 30%, 33%, 35%, 37%, 39%, 40%, 43%, 45%, 47%, 49%, or within a range defined by any two of these values. According to some embodiments of this application, $20\% \leq n2 \leq 40\%$. n2 falling within the foregoing range can further improve infiltration of the electrolyte, facilitates transport of active ions, and ensures an appropriate porosity of the active material layer, thereby improving the rate performance of the secondary battery and increasing the energy density of the secondary battery.

According to some embodiments of this application, the longest diameter of the graphite particle in the second region is 5 µm to 25 µm. In some embodiments, in the second region, the longest diameter of the graphite particle is 5 µm, 8 µm, 11 µm, 12 µm, 13 µm, 14 µm, 15 µm, 16 µm, 17 µm, 18 µm, 19 µm, 20 µm, 21 µm, 22 µm, 23 µm, 24 µm, or within a range defined by any two of these values. According to some embodiments of this application, the longest diameter of the graphite particle in the second region is 5 µm to 20 µm. The longest diameter of the graphite particle falling within the foregoing range further facilitates intercalation and deintercalation of active ions and ensures an appropriate porosity of the active material layer, thereby further increasing the energy density of the secondary battery and improving the rate performance of the secondary battery.

According to some embodiments of this application, a longest diameter of the graphite particle in the negative electrode active material layer is 5 µm to 40 µm. In some embodiments, in the negative electrode active material layer, the long diameter of the graphite particle is 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, or within a range defined by any two of these values. According to some embodiments of this application, the longest diameter of the graphite particle in the negative electrode active material layer is 5 µm to 30 µm. The longest diameter of the graphite particle in the negative electrode active material layer falling within the foregoing range can shorten the transport paths for active ions in the negative electrode active material layer and improve infiltration of the electrolyte, thereby improving the internal kinetic performance of the secondary battery. In addition, this ensures an appropriate porosity of the active material layer, thereby improving the rate performance of the secondary battery and increasing the energy density of the secondary battery.

According to some embodiments of this application, a compacted density of the negative electrode active material layer is 1.0 g/cm³ to 1.5 g/cm³. When the compacted density falls within the foregoing range, the first region and the second region have appropriate porosities, which in turn facilitates infiltration of the electrolyte and intercalation and deintercalation of active ions, allowing the secondary battery to have high energy density and excellent rate performance.

According to some embodiments of this application, a single-sided thickness of the negative electrode active material layer is 30 µm to 80 µm. In some embodiments, the single-sided thickness of the negative electrode active material layer is 35 µm, 40 µm, 45 µm, 50 µm, 55 µm, 60 µm, 65 µm, 70 µm, 75 µm, or within a range defined by any two of these values. The thickness of the negative electrode active material layer falling within the foregoing range further facilitates infiltration of the electrolyte and transport of active ions, and reduces transport impedance of active ions, which not only is conducive to improving fast charging performance of the secondary battery but also can ensure high energy density of the secondary battery.

In this application, the "single-sided thickness of the negative electrode active material layer" is a thickness of the negative electrode active material layer on one side of the negative electrode current collector, that is, the single-sided thickness of the negative electrode active material layer. According to some embodiments of this application, a double-sided thickness of the negative electrode active material layer is 60 µm to 160 µm.

According to some embodiments of this application, a single-sided weight of the negative electrode active material layer is 0.03 mg/mm² to 0.12 mg/mm². In some embodiments, the single-sided weight of the negative electrode active material layer is 0.05 mg/mm$^2$, 0.06 mg/mm$^2$, 0.07 mg/mm$^2$, 0.08 mg/mm$^2$, 0.09 mg/mm$^2$, 0.1 mg/mm$^2$, 0.11 mg/mm$^2$, or within a range defined by any two of these values. An excessively low single-sided weight of the negative electrode active material layer leads to an excessively small single-sided thickness of the negative electrode active material layer, so the electrode plate is easily damaged during pressing. An excessively high single-sided weight of the negative electrode active material layer results in longer transport paths for active ions and increased intercalation and deintercalation resistance, thereby causing lithium precipitation. The single-sided weight of the negative electrode active material layer falling within the foregoing range can reduce resistance during intercalation and deintercalation of active ions and shorten the transport paths for ions, and allows the active material layer to have an appropriate porosity, thereby improving the rate performance of the secondary battery and increasing the energy density of the secondary battery.

In this application, the "single-sided weight of the negative electrode active material layer" is a weight of the negative electrode active material layer on one side of the negative electrode current collector, that is, the single-sided weight of the negative electrode active material layer.

According to some embodiments of this application, the graphite includes natural graphite.

According to some embodiments of this application, the natural graphite includes primary particles. In this application, the primary particles of the natural graphite refer to spheroidized and coated natural graphite, obtained without granulation.

According to some embodiments of this application, a preparation process of the natural graphite includes the following steps: selecting natural flake graphite for pulverizing; weighing natural flake graphite powder with a mass fraction of 50% to 90% based on a total mass of the natural flake graphite and a binder, where a particle size D$_v$50 of the natural flake graphite powder is 3 μm to 15 μm; weighing a binder with a mass fraction of 10% to 50% based on the total mass of the natural flake graphite and the binder, where the binder includes at least one of asphalt, phenolic resin, or epoxy resin with a softening point of 120°C to 300°C, where the asphalt includes high-purity asphalt with a softening point of 120°C to 300°C; mixing the weighed natural flake graphite powder and binder, placing the evenly mixed powder in a reactor for heating while stirring at a heating temperature controlled at 500°C to 1000°C, and then graphitizing the mixed powder to obtain a semi-finished material A; and mixing the material A and a certain amount of coating agent, where a mixing mass ratio of the material A to the coating agent is 95:5, and the coating agent includes at least one of asphalt, kerosene, resin, or graphene, and placing the evenly mixed mixture in a high-temperature carbonization furnace for calcination at 1150°C for 4 h to obtain a material B. The material B is the natural graphite used in the negative electrode active material layer of this application.

According to some embodiments of this application, D$_v$50 of the natural graphite is 4 μm to 25 μm. In some embodiments, D$_v$50 of the natural graphite is 5 μm, 6 μm, 7 μm, 8 μm, 9 μm, 10 μm, 11 μm, 12 μm, 13 μm, 14 μm, 15 μm, 16 μm, 17 μm, 18 μm, 19 μm, 20 μm, 21 μm, 22 μm, 23 μm, 24 μm, or within a range defined by any two of these values. The particle size of the natural graphite falling within the foregoing range facilitates intercalation and deintercalation of active ions, can reduce resistance during intercalation and deintercalation of active ions and shorten the transport paths for ions, and allows the active material layer to have an appropriate porosity, thereby improving the rate performance of the secondary battery and increasing the energy density of the secondary battery.

In this application, D$_v$50 means that based on the distribution by volume, 50% of the particles of the natural graphite have a particle size smaller than this value.

According to some embodiments of this application, a powder compacted density of the natural graphite is 1.7 g/cm$^3$ to 2.05 g/cm$^3$. In some embodiments, the powder compacted density of the natural graphite is 1.75 g/cm$^3$, 1.8 g/cm$^3$, 1.85 g/cm$^3$, 1.9 g/cm$^3$, 1.95 g/cm$^3$, 2.00 g/cm$^3$, or within a range defined by any two of these values. The powder compacted density falling within the foregoing range can not only ensure high volumetric energy density but also maintain good internal kinetic performance, thereby improving the rate performance of the secondary battery.

According to some embodiments of this application, a specific surface area (BET) of the natural graphite is 3 m$^2$/g to 6 m$^2$/g. In some embodiments, the specific surface area of the natural graphite is 3.5 m$^2$/g, 4 m$^2$/g, 4.5 m$^2$/g, 5 m$^2$/g, or 5.5 m$^2$/g. Controlling the specific surface area within the foregoing range can not only reduce consumption caused by film forming of active ions on the surface, but also maintain a good infiltration speed of the electrolyte, thereby further improving the rate performance of the secondary battery and increasing the energy density of the secondary battery.

According to some embodiments of this application, an electrolyte infiltration time of the negative electrode active material layer is ≤ 70s. In this application, the electrolyte infiltration time of the negative electrode active material layer is a time in which 5 mL electrolyte dripped onto a surface of a 50 mm long and 50 mm wide negative electrode active material layer completely disappears from the surface of the active material layer. When the electrolyte infiltration time of the negative electrode active material layer is ≤ 70s, it indicates that the electrolyte has a good infiltration effect on the negative electrode active material layer, improving the internal kinetic performance of the secondary battery, thereby improving the rate performance of the secondary battery.

According to some embodiments of this application, the negative electrode current collector includes copper foil, aluminum foil, nickel foil, stainless steel foil, titanium foil, nickel foam, copper foam, a polymer substrate coated with conductive metal, or any combination thereof.

According to some embodiments of this application, the negative electrode active material layer further includes a binder and a conductive agent. In some embodiments, the binder includes but is not limited to polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the conductive agent includes but is not limited to a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, where the positive electrode includes a positive electrode current collector and a positive electrode active material layer, and the positive electrode active material layer includes a positive electrode active material, a binder, and a conductive agent.

According to some embodiments of this application, the positive electrode current collector may be a metal foil current collector or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder includes a binder polymer, for example, at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, the polyolefin binder includes at least one of polyethylene, polypropylene, polyester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber including copper, nickel, aluminum, silver, and the like; a conductive polymer such as a polyphenylene derivative; or a mixture thereof.

The secondary battery of this application further includes a separator. The separator used in the secondary battery of this application is not limited to any particular material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, film, or composite film having a porous structure, and material of the substrate layer is selected from at least one of polyethylene, polypropylene, polyethylene glycol terephthalate, or polyimide. Specifically, the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer, and the surface treatment layer may be a polymer layer, an inorganic substance layer, or a layer formed by mixing a polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and material of the polymer is selected from at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

The secondary battery of this application further includes an electrolyte. An electrolyte that can be used in this application may be an electrolyte known in the prior art.

According to some embodiments of this application, the electrolyte includes an organic solvent, a lithium salt, and an optional additive. The organic solvent in the electrolyte of this application may be any organic solvent known in the prior art that can be used as a solvent of the electrolyte. The electrolytic salt used in the electrolyte according to this application is not limited, and may be any electrolytic salt known in the prior art. The additive of the electrolyte according to this application may be any additive known in the prior art that can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, including at least one of 1,3-dioxolane (DOL) or dimethoxyethane (DME). In some embodiments, the lithium salt includes at least one of an organic lithium salt or an inorganic lithium salt. In some embodiments, the lithium salt includes but is not limited to lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalato)borate $LiB(C_2O_4)_2$ (LiBOB), or lithium difluoro(oxalato)borate $LiBF_2(C_2O_4)$ (LiDFOB). In some embodiments, the additive includes at least one of fluoroethylene carbonate or adiponitrile.

According to some embodiments of this application, the secondary battery of this application includes but is not limited to a lithium-ion battery or a sodium-ion battery. In some embodiments, the secondary battery includes a lithium-ion battery.

II. Electronic apparatus

This application further provides an electronic apparatus, including the secondary battery according to the first aspect of this application.

The electronic device or apparatus of this application is not particularly limited. In some embodiments, the electronic device of this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

In the following examples and comparative examples, all reagents, materials, and instruments used are commercially available unless otherwise specified.

**Examples and Comparative Examples**

Preparation of positive electrode

Lithium cobalt oxide (with a molecular formula of $LiCoO_2$), acetylene black, and polyvinylidene fluoride (PVDF for short) were fully stirred and mixed at a weight ratio of 96:2:2 in an appropriate amount of N-methylpyrrolidone (NMP for short) solvent to produce a uniform positive electrode slurry; and the positive electrode slurry was applied onto an aluminum foil, followed by drying, cold pressing, cutting, and tab welding, to obtain a positive electrode.

Preparation of negative electrode

Preparation of natural graphite: a raw material natural flake graphite was selected for pulverizing; natural flake graphite powder with a mass fraction of 50% to 90% and a particle size $D_v50$ of 3 μm to 15 μm was weighed based on a total mass of the natural flake graphite and a binder asphalt; binder asphalt powder with a mass fraction of 10% to 50% was weighed based on the total mass of the natural flake graphite and the binder asphalt; the weighed natural flake graphite powder and binder asphalt powder were mixed, where the asphalt was high-purity asphalt with a softening point of 200°C, the evenly mixed powder was placed in a reactor for heating while stirring at a heating temperature controlled at 800°C, and then the mixed powder was graphitized to obtain a semi-finished material A; and the material A and a certain amount of coating agent were mixed, where a mixing mass ratio of the material A to the coating agent was 95:5, and the coating agent was graphene, and the evenly mixed mixture was placed in a high-temperature carbonization furnace for calcination at 1150°C for 4 h to obtain a material B. The material B was the natural graphite used in the negative electrode active material layer of this application.

The prepared natural graphite, styrene-butadiene rubber (SBR for short), and sodium carboxymethyl cellulose (CMC for short) were fully stirred and mixed at a weight ratio of 98:1:1 in deionized water solvent to produce a uniform negative electrode slurry; and the negative electrode slurry was applied onto a negative electrode current collector copper foil pre-coated with a primer layer (carbon black), where thickness of the primer layer was 1.5 μm, followed by drying, cold pressing on the coated negative electrode at different rolling pressures, cutting, and welding.

In Examples 1 to 17 and Comparative Example 1, the cross-sectional porosity of the negative electrode active material layer and the included angle between the longest diameter of the graphite particle and the direction of the negative electrode current collector are adjusted by controlling the OI value of the raw material natural flake graphite, the mass fraction of the binder asphalt powder, and the cold pressing pressure of the negative electrode plate. For details, refer to Table A below.

**Table A**

| Example | OI value of raw material natural flake graphite | Mass fraction of binder asphalt powder (%) | Cold pressing pressure of negative electrode plate (t) |
|---|---|---|---|
| Example 1 | 7 | 10 | 5 |
| Example 2 | 7 | 10 | 5 |
| Example 3 | 7 | 10 | 5 |
| Example 4 | 6 | 20 | 10 |
| Example 5 | 6 | 20 | 10 |
| Example 6 | 6 | 20 | 10 |
| Example 7 | 5 | 30 | 15 |
| Example 8 | 5 | 30 | 15 |
| Example 9 | 5 | 30 | 15 |
| Example 10 | 5 | 30 | 15 |
| Example 11 | 4 | 40 | 20 |
| Example 12 | 4 | 40 | 20 |
| Example 13 | 4 | 40 | 20 |
| Example 14 | 3 | 50 | 25 |
| Example 15 | 3 | 50 | 25 |
| Example 16 | 3 | 50 | 25 |
| Example 17 | 3 | 50 | 25 |
| Comparative Example 1 | 8 | 5 | 35 |

Preparation of separator

A 7 $\mu$m thick polyethylene porous polymer film was used as a separator.

Preparation of electrolyte

In a dry argon environment, in a solvent formed by mixing ethylene carbonate (EC), propylene carbonate (PC), and diethyl carbonate (DEC) at a weight ratio of 1:1:1, $LiPF_6$ was added, and the mixture was evenly mixed, where a concentration of the $LiPF_6$ was 1.15 mol/L. Then, fluoroethylene carbonate and adiponitrile were added, and the mixture was evenly mixed to obtain an electrolyte. Based on a total weight of the electrolyte, a weight percentage of the fluoroethylene carbonate was 3%, and a weight percentage of the adiponitrile was 2%.

Preparation of lithium-ion battery

The positive electrode, the separator, and the negative electrode were sequentially stacked so that the separator was located between the positive electrode and the negative electrode for separation. Then, the resulting stack was wound to form an electrode assembly. After tabs were welded, the electrode assembly was placed in an outer package aluminum foil plastic film, and the prepared electrolyte was injected into the dried electrode assembly, followed by processes such as vacuum packaging, standing, formation, shaping, and capacity testing, to obtain a pouch lithium-ion battery.

**Test method**

**1. Tests of cross-sectional porosity, longest diameter of graphite particle, and included angle between longest diameter of graphite particle and direction of current collector**

Preparation process of (CP) sample of negative electrode ion grinding: the lithium-ion battery was disassembled to obtain the negative electrode plate, the negative electrode active material layer was scraped off with a scraper, the negative electrode active material layer was cut into a size of 0.5 cm × 1 cm, the cut negative electrode active material layer was attached to a silicon wafer carrier with a size of 1 cm × 1.5 cm with a conductive adhesive, and then one end of the negative electrode active material layer was subjected to argon ion polishing (parameters: an acceleration voltage of 8 KV, and 4 h for each sample) to obtain the (CP) sample of the negative electrode active material layer.

After the CP sample of the negative electrode active material layer was prepared, a scanning electron microscope (SEM) was used for analysis.

The scanning electron microscope used in this application is JSM-6360LV from JEOL.

Porosity test of cross sections with different thicknesses of negative electrode active material layer: test areas of 1000 μm × A μm were selected, gaps between all particles in the cross sections at thicknesses of A = 10 μm and A > 10 μm were counted, images with distinct brightness and darkness between particles and pores were obtained by using the maps test method, and then the electrode plate was processed using an image software to obtain the cross-sectional porosity.

Test of longest diameter of graphite particle

After 50 cross-sectional images of the CP sample of the negative electrode active material layer were obtained using the SEM, the longest diameters of all graphite particles in the thickness cross sections of the negative electrode active material layer were counted, then the image software was used for processing to obtain statistical data of the longest diameters of the graphite particles in the negative electrode active material layer, and the average values were calculated. In addition, for each image, test areas of 1000 μm × A μm were selected, the longest diameters of all graphite particles in the cross sections at thicknesses of A = 10 μm (the first region) and from A > 10 μm to the surface of the current collector (the second region) were counted, the longest diameters of all graphite particles in the field of view of different regions were counted using the image software, and the average values were calculated to obtain the data of the longest diameters of the graphite particles in different regions.

Test of included angle between longest diameter of graphite particle and direction of current collector

After 50 cross-sectional images of the CP sample of the negative electrode active material layer were obtained using the SEM, the included angles between the longest diameters of all graphite particles in the thickness cross sections of the negative electrode active material layer and the direction of the current collector were counted, then the image software was used for processing to obtain the included angles between the longest diameters of the graphite particles in the negative electrode active material layer and the direction of the current collector, and the average values were calculated. In addition, for each image, test areas of 1000 μm × A μm were selected, the included angles between the longest diameters of all graphite particles in the cross sections at thicknesses of A = 10 μm (the first region) and from A > 10 μm to the surface of the current collector (the second region) and the direction of the current collector were counted, the included angles between the longest diameters of all graphite particles in the field of view of different regions and the direction of the current collector were counted using the image software, and the average values were calculated to obtain the data of the included angles between the longest diameters of the graphite particles in different regions and the direction of the current collector.

## 2. Powder compacted density test

For the test standard of the powder compacted density, reference was made to GB/T 24533-2009 Graphite Negative Electrode Materials for Lithium-Ion Battery. The specific test method was as follows:

1.0000 ± 0.0500 g of graphite material sample was weighed and put in a test mold (CARVER#3619 (13 mm)), and then the sample was put in a test device, where the test device was Sunstest UTM7305 at test loads of 0.3 t, 0.5 t, 0.75 t, 1.0 t, 1.5 t, 2.0 t, 2.5 t, 3.0 t, 4.0 t, and 5.0 t, a pressure increasing velocity of 10 mm/min, a pressure increasing holding time of 30s, a pressure releasing velocity of 30 mm/min, and a pressure releasing holding time of 10s.

In this application, the powder compacted density was a compacted density measured after pressure releasing at 5 t. The calculation formula of the compacted density was: compacted density = material mass/(material stress area × sample thickness).

## 3. Particle size test

The disassembled negative electrode active material layer was placed in a crucible first, and heated to 300°C to 600°C. Then, the current collector was separated from the natural graphite powder to obtain natural graphite powder being tested.

For the test method of the particle size, reference was made to GB/T 19077-2016. The specific process was as follows:

1 g of the natural graphite sample being tested was weighed and evenly mixed with 20 mL deionized water and a small amount of dispersant, the mixture was placed in an ultrasonic device for ultrasounding for 5 min, and then the solution was poured into a sample injection system Hydro 2000SM for testing, where the test device used was Mastersizer 3000 manufactured by Malvern.

During the test, when a laser beam passed through the dispersed particle sample, the particle size was measured by measuring the intensity of scattered light. Then, the data was used to analyze and calculate the particle size distribution that formed the scattered light spectrogram. The refractive index of the particles used in the test was 1.8, each sample was measured three times, and the particle size was ultimately determined by taking the average value of the three measurements.

## 4. Test of infiltration time of negative electrode active material layer

A 50 mm long and 50 mm wide negative electrode active material layer sample was taken. Under a dry condition, 5 mL electrolyte was dripped onto the surface of the sample, and timing was started. After the electrolyte completely disappeared from the surface of the sample, the timing was stopped. The timing time was recorded as the infiltration time of the negative electrode active material layer. 30 samples were tested for each example or comparative example, and the average value was calculated, where the electrolyte was the same as that in the lithium-ion battery.

## 5. Lithium-ion liquid-phase transport impedance (Rion) test

The lithium-ion battery was connected to a Bio-Logic VMP3B electrochemical workstation manufactured by Bio-Logic of France for testing, with a frequency range of 30 mHz to 50 kHz and an amplitude of 5 mV. After the data was collected, a complex plane impedance plot was used to analyze the data to obtain the lithium-ion liquid-phase transport impedance (Rion).

## 6. Test method of discharge capacity retention rate of lithium-ion battery at 2C

At 25°C, the lithium-ion battery was left standing for 5 minutes, charged to 4.45 V at a constant current of 0.7C, then charged to 0.05C at a constant voltage of 4.45 V, left standing for 5 minutes, discharged to 3.0 V at a constant current of 0.5C, and left standing for 5 minutes. Such charging and discharging processes were repeated. The lithium-ion battery was discharged at 0.1C, and a discharge capacity of the lithium-ion battery at 0.1C was recorded; and then the lithium-ion battery was discharged at 2C, and a discharge capacity of the lithium-ion battery at 2C was recorded. The discharge capacity retention rate of the lithium-ion battery at 2C was calculated according to the following formula:

Discharge capacity retention rate at 2C = discharge capacity at 2C/discharge capacity at 0.1C $\times$ 100%.

## 7. Direct-current resistance (DCR) test

At 25°C, the lithium-ion battery was charged to 4.45 V at a constant current of 1.5C, then charged to 0.05C at a constant voltage of 4.45 V, left standing for 30 minutes, discharged at 0.1C for 10 seconds, with a voltage value recorded as U1, and discharged at 1C for 360 seconds, with a voltage value recorded as U2. Such charging and discharging steps were repeated for 5 times. "1C" refers to a current value at which a lithium-ion battery is fully discharged in one hour.

A direct-current resistance R of the lithium-ion battery at 25°C was calculated according to the following formula:

$$R = (U2 - U1)/(1C - 0.1C).$$

A direct-current resistance of the lithium-ion battery at 0°C was measured by using the steps of the method for measuring the direct-current resistance R of the lithium-ion battery at 25°C, except that the operating temperature was 0°C.

Unless otherwise specified, the DCR in this application is a direct-current resistance of the lithium-ion battery in a 10% state of charge (SOC).

## 8. Electrochemical impedance spectroscopy (EIS) test

a) Preparation of three-electrode battery and lithium plating: the preparation method was the same as that of the foregoing lithium-ion battery. During preparation of the lithium-ion battery, a copper wire was connected to the battery as a reference electrode, and the negative electrode was plated with lithium at a current of 20 $\mu$A for 6 h. After lithium plating was completed, the EIS was tested.

B) EIS test steps: the lithium-plated three-electrode battery was connected to the Bio-Logic VMP3B electrochemical workstation manufactured by Bio-Logic of France for testing, with a frequency range of 30 mHz to 50 kHz and an amplitude of 5 mV. After the data was collected, the complex plane impedance plot was used to analyze the data to obtain the Rct data.

### 9. Test of lithium precipitation degree at negative electrode

At a test temperature of 0°C, the lithium-ion battery under test was taken and left standing for 5 minutes, charged to 4.45 V at a constant current of 0.8C, then charged to 0.05C at a constant voltage of 4.45 V, left standing for 5 minutes, discharged to 3.0 V at a constant current of 0.5C, and left standing for 5 minutes. After such charging and discharging processes were repeated for 10 times, the battery was fully charged and disassembled in a drying room, and photos were taken to record the state of the negative electrode.

Determining of lithium precipitation degree: the lithium precipitation degree was determined based on the state of the negative electrode after full charge and disassembling. When the overall negative electrode showed golden yellow and the gray area was < 2%, the negative electrode was determined as no lithium precipitation; when most of the negative electrode showed golden yellow but gray could be observed at some positions, and the gray area was 2% to 20%, the negative electrode was determined as slight lithium precipitation; when a part of the negative electrode showed gray but golden yellow could still be observed at some positions, and the gray area was 20% to 60%, the negative electrode was determined as lithium precipitation; and when most of the negative electrode showed gray and the gray area was > 60%, the negative electrode was determined as severe lithium precipitation.

### 10. Volumetric energy density

The discharge capacity of the lithium-ion battery was recorded as D mAh, the platform voltage of the lithium-ion battery was recorded as U V, and the length, width, and thickness of the lithium-ion battery were recorded as L mm, W mm, and H mm respectively. Volumetric energy density VED = $D \times U/(L \times W \times H) \times 1000$.

### 11. First-cycle efficiency test

The assembled lithium-ion battery was charged and activated to 4.45 V at 0.5C, and a capacity at that point was recorded as C0. Then, the battery was discharged to 3.0 V at 0.5C, and a capacity at that point was recorded as D0. The formula for the first-cycle efficiency test was $D0/C0 \times 100\%$.

### Test result

Table 1 shows the influences of the cross-sectional porosity of the negative electrode active material layer and the proportion of the graphite particles in which the longest diameter of the graphite particle has an included angle of 0° to 20° with the direction of the negative electrode current collector on the performance of the lithium-ion battery.

The cross-sectional porosity of the first region is n1, and the proportion of the graphite particles in the first region is m1, with the longest diameter of the graphite particle having an included angle of 0° to 20° with the direction of the negative electrode current collector. The cross-sectional porosity of the second region is n2, and the proportion of the graphite particles in the second region is m2, with the longest diameter of the graphite particle having an included angle of 0° to 20° with the direction of the negative electrode current collector.

In Examples 1 to 17 and Comparative Example 1, the longest diameters of the graphite particles in the first region are the same, which are 31 $\mu$m; and the longest diameters of the graphite particles in the second region are the same, which are 31 $\mu$m.

In Examples 1 to 17 and Comparative Example 1, the compacted densities of the negative electrode active material layers are the same, which are 1.3 g/cm$^3$; the single-sided thicknesses of the negative electrode active material layers are the same, which are 38 $\mu$m; and the single-sided weights of the negative electrode active material layers are the same, which are 0.05 mg/mm$^2$.

In Examples 1 to 17 and Comparative Example 1, the powder compacted densities of the graphites are the same, which are 2.00 g/cm$^3$; and the specific surface areas of the graphites are the same, which are 3.42 m$^2$/g.

In Examples 1 to 10 and 14 to 17 and Comparative Example 1, $D_v50$s of the natural graphites are the same, which are 22 $\mu$m, and in Examples 11 to 13, $D_v50$s of the natural graphites are the same, which are 22 $\mu$m.

**Table 1**

| Example and Comparative Example | m1 | n1 | m1/n1 | m2 | n2 | m2/n2 | Volumetric energy density (wh/L) | Rct (mΩ, 0°C) |
|---|---|---|---|---|---|---|---|---|
| Example 1 | 90% | 5% | 18 | 70% | 15% | 5 | 770 | 49.68 |
| Example 2 | 90% | 5% | 18 | 70% | 20% | 4 | 768 | 48.46 |
| Example 3 | 90% | 5% | 18 | 70% | 30% | 2 | 765 | 46.85 |
| Example 4 | 85% | 8% | 11 | 65% | 20% | 3 | 763 | 45.36 |
| Example 5 | 85% | 8% | 11 | 65% | 30% | 2 | 762 | 43.34 |
| Example 6 | 85% | 8% | 11 | 65% | 40% | 2 | 758 | 38.46 |
| Example 7 | 80% | 12% | 7 | 60% | 25% | 2 | 757 | 36.92 |
| Example 8 | 80% | 12% | 7 | 60% | 30% | 2 | 750 | 35.63 |
| Example 9 | 80% | 12% | 7 | 60% | 35% | 2 | 749 | 35.39 |
| Example 10 | 80% | 12% | 7 | 60% | 40% | 2 | 743 | 34.66 |
| Example 11 | 70% | 16% | 4 | 50% | 30% | 2 | 720 | 23.45 |
| Example 12 | 70% | 16% | 4 | 50% | 35% | 1 | 719 | 21.35 |
| Example 13 | 70% | 16% | 4 | 50% | 40% | 1 | 717 | 18.76 |
| Example 14 | 60% | 20% | 3 | 40% | 30% | 1 | 740 | 33.23 |
| Example 15 | 60% | 20% | 3 | 40% | 35% | 1 | 738 | 32.53 |
| Example 16 | 60% | 20% | 3 | 40% | 40% | 1 | 736 | 31.29 |
| Example 17 | 60% | 20% | 3 | 40% | 45% | 1 | 735 | 29.29 |
| Comparative Example 1 | 99% | 4% | 25 | 80% | 10% | 8 | 700 | 58.9 |

It can be learned from the data of Examples 1 to 17 and Comparative Example 1 that when the cross-sectional porosity of the first region of the negative electrode active material layer and the proportion of the graphite particles in which the longest diameter of the graphite particle has an included angle of 0° to 20° with the direction of the negative electrode current collector satisfy $3 \leq m1/n1 \leq 18$ and $5\% \leq n1 \leq 20$, the transport distance of lithium ions can be shortened, the internal kinetic performance of the lithium-ion battery can be improved, and an appropriate porosity of the negative electrode active material layer can be ensured, thereby obviously increasing the volumetric energy density of the lithium-ion battery and reducing the electrochemical impedance, allowing the lithium-ion battery to have both high energy density and excellent rate performance.

When m1 is from 60% to 90%, $1 \leq m2/n2 \leq 5$, $40 \leq m2 \leq 70\%$, and $10\% \leq n2 \leq 50\%$, the transport paths for lithium ions can be shortened, and the internal kinetic performance of the lithium-ion battery can be improved, thereby further improving the rate performance of the lithium-ion battery, allowing the lithium-ion battery to have high energy density.

Table 2 shows the influences of the compacted density of the active material layer, the longest diameter of the graphite particle, and the single-sided thickness and single-sided weight of the negative electrode active material layer on the performance of the lithium-ion battery. Other parameters in Examples 18 to 34 are the same as those in Example 7 except the parameters listed in Table 2.

**Table 2**

| Example | Compacted density of negative electrode active material layer (g/cm$^3$) | D$_v$50 of natural graphite (μm) | Longest diameter of graphite particle in negative electrode active material layer (μm) | Single-sided thickness of negative electrode active material layer (μm) | Single-sided weight of negative electrode active material layer (g/mm$^2$) | Lithium precipitation at 0°C | Liquid-phase transport impedance at 0°C (Rion) (mΩ) | Discharge capacity retention rate at 2C (%) | DCR at 0°C (mΩ) |
|---|---|---|---|---|---|---|---|---|---|
| Example 7 | 1.3 | 22 | 31 | 38.46 | 0.05 | No lithium precipitation | 9.0 | 85.0 | 226.5 |
| Example 18 | 1 | 22 | 28 | 30.00 | 0.03 | No lithium precipitation | 8.4 | 90.0 | 219.3 |
| Example 19 | 1 | 22 | 26 | 40.00 | 0.04 | No lithium precipitation | 7.9 | 90.4 | 218.3 |
| Example 20 | 1 | 22 | 25 | 60.00 | 0.06 | No lithium precipitation | 6.5 | 91.3 | 216.8 |
| Example 21 | 1 | 22 | 23 | 80.00 | 0.12 | No lithium precipitation | 5.9 | 92.6 | 213.5 |
| Example 22 | 1.1 | 22 | 33 | 36.36 | 0.04 | No lithium precipitation | 8.2 | 87.6 | 221.2 |
| Example 23 | 1.1 | 22 | 29 | 54.55 | 0.06 | No lithium precipitation | 7.5 | 88.4 | 220.7 |
| Example 24 | 1.1 | 22 | 27 | 72.73 | 0.12 | No lithium precipitation | 6.3 | 89.0 | 220.5 |
| Example 25 | 1.2 | 5 | 15 | 33.33 | 0.04 | No lithium precipitation | 4.2 | 93.4 | 200.1 |
| Example 26 | 1.2 | 5 | 11 | 50.00 | 0.06 | No lithium precipitation | 3.8 | 95.0 | 194.5 |
| Example 27 | 1.2 | 5 | 8 | 66.67 | 0.12 | No lithium precipitation | 2.4 | 95.8 | 192.2 |
| Example 28 | 1.3 | 22 | 37 | 30.77 | 0.04 | No lithium precipitation | 9.2 | 84.7 | 228.1 |
| Example 29 | 1.3 | 22 | 35 | 46.15 | 0.06 | No lithium precipitation | 8.9 | 85.5 | 225.7 |

| Example | Compacted density of negative electrode active material layer (g/cm$^3$) | $D_v50$ of natural graphite ($\mu$m) | Longest diameter of graphite particle in negative electrode active material layer ($\mu$m) | Single-sided thickness of negative electrode active material layer ($\mu$m) | Single-sided weight of negative electrode active material layer (g/mm$^2$) | Lithium precipitation at 0°C | Liquid-phase transport impedance at 0°C (Rion) (m$\Omega$) | Discharge capacity retention rate at 2C (%) | DCR at 0°C (m$\Omega$) |
|---|---|---|---|---|---|---|---|---|---|
| Example 30 | 1.3 | 22 | 33 | 61.54 | 0.12 | No lithium precipitation | 7.8 | 87.0 | 223.6 |
| Example 31 | 1.5 | 22 | 40 | 40.00 | 0.06 | No lithium precipitation | 10.5 | 83.3 | 232.4 |
| Example 32 | 1.5 | 22 | 38 | 53.33 | 0.12 | Slight lithium precipitation | 9.4 | 84.0% | 230.2 |
| Example 33 | 0.8 | 22 | 27 | 100.00 | 0.12 | Lithium precipitation | 18.3 | 65.2% | 245.4 |
| Example 34 | 1.7 | 22 | 44 | 17.65 | 0.03 | Severe lithium precipitation | 25.3 | 43.2% | 257.9 |

As shown in Table 2, when $D_v50$ of the natural graphite is 4 $\mu$m to 25 $\mu$m, the longest diameter of the graphite particle in the negative electrode active material layer is 5 $\mu$m to 40 $\mu$m, and the compacted density of the negative electrode active material layer is 1.0 g/cm$^3$ to 1.5 g/cm$^3$, adjusting the single-sided thickness of the negative electrode active material layer to 30 $\mu$m to 80 $\mu$m and the single-sided weight of the negative electrode active material layer to 0.03 mg/mm$^2$ to 0.12 mg/mm$^2$ can reduce the intercalation and deintercalation resistance of lithium ions, which facilitates transport of lithium ions and reduces the impedance of the lithium-ion battery, thereby further improving the rate performance of the lithium-ion battery and alleviating lithium precipitation of the lithium-ion battery.

Table 3 shows the influences of the particle size, powder compacted density, and BET of the natural graphite on the performance of the lithium-ion battery. Other parameters in Examples 35 to 44 are the same as those in Example 7 except the parameters listed in Table 3.

**Table 3**

| Example | $D_v50$ of natural graphite ($\mu$m) | Powder compacted density of natural graphite (g/cm$^3$) | BET of natural graphite (m$^2$/g) | Complete infiltration time of 5 mL solution (s) | Liquid-phase transport impedance (Rion) (25°C, $\Omega$) | First-cycle efficiency (%) |
|---|---|---|---|---|---|---|
| Example 7 | 22 | 2.00 | 3.42 | 34 | 2.7 | 95.50 |
| Example 35 | 4 | 1.7 | 6.00 | 5 | 9.0 | 88.50 |
| Example 36 | 8 | 1.75 | 5.75 | 10 | 8.4 | 89.30 |
| Example 37 | 10 | 1.85 | 5.23 | 12 | 7.0 | 91.20 |
| Example 38 | 14 | 1.92 | 4.80 | 15 | 6.5 | 93.20 |
| Example 39 | 16 | 1.95 | 4.20 | 23 | 7.9 | 94.70 |
| Example 40 | 20 | 2.05 | 3.85 | 29 | 3.8 | 95.20 |
| Example 41 | 23 | 1.98 | 3.30 | 43 | 2.4 | 95.80 |

| Example | $D_v50$ of natural graphite ($\mu$m) | Powder compacted density of natural graphite (g/cm$^3$) | BET of natural graphite (m$^2$/g) | Complete infiltration time of 5 mL solution (s) | Liquid-phase transport impedance (Rion) (25°C, $\Omega$) | First-cycle efficiency (%) |
|---|---|---|---|---|---|---|
| Example 42 | 25 | 1.95 | 3.00 | 52 | 3.9 | 96.30 |
| Example 43 | 2 | 1.30 | 5.00 | 3 | 2.3 | 58.20 |
| Example 44 | 30 | 1.80 | 1.50 | 70 | 11.5 | 96.50 |

As shown in Examples 7 and 35 to 44, with the increase in the particle size of the graphite, the infiltration time required by the electrolyte increases, indicating that the diffusion speed of lithium ions decreases. In addition, with the decrease in the specific surface area, consumption of active lithium required for film forming decreases, resulting in increased first-cycle efficiency of the lithium-ion battery. Therefore, adjusting the particle size, powder compacted density, and specific surface area of the graphite can allow the lithium-ion battery to further have low liquid-phase transport impedance and high first-cycle efficiency, thereby improving the rate performance of the lithium-ion battery.

Although illustrative embodiments have been demonstrated and described, persons skilled in the art should understand that the foregoing embodiments should not be construed as any limitation on this application, and that the embodiments may be changed, replaced, and modified without departing from the spirit, principle, and scope of this application.

**Claims**

1. A secondary battery, comprising a negative electrode, wherein the negative electrode comprises a negative electrode current collector and a negative electrode active material layer disposed on the negative electrode current collector, and the negative electrode active material layer comprises graphite particles, wherein in a thickness direction of the negative electrode active material layer, a region from a surface of the negative electrode active material layer to 10 $\mu$m inside the negative electrode active material layer is a first region, the secondary battery satisfying $3 \leq m1/n1 \leq 18$ and $5\% \leq n1 \leq 20\%$, wherein m1 represents a proportion of graphite particles in the first region, with a longest diameter of the graphite particle having an included angle of 0° to 20° with a direction of the negative electrode current collector, and n1 represents a cross-sectional porosity of the first region.

2. The secondary battery according to claim 1, wherein the secondary battery satisfies at least one of the following condition (1) or (2):

$$(1)\ 5 \leq m1/n1 \leq 12;\ \text{or}$$

$$(2)\ 7\% \leq n1 \leq 15\%.$$

3. The secondary battery according to claim 1 or 2, wherein the secondary battery satisfies at least one of the following condition (3) or (4):

$$(3)\ 60\% \leq m1 \leq 90\%;\ \text{or}$$

(4) the longest diameter of the graphite particle in the first region is 20 $\mu$m to 40 $\mu$m.

4. The secondary battery according to claim 1 or 2, wherein the secondary battery satisfies at least one of the following condition (5) or (6):

$$(5)\ 65\% \leq m1 \leq 85\%;\ \text{or}$$

(6) the longest diameter of the graphite particle in the first region is 20 $\mu$m to 30 $\mu$m.

5. The secondary battery according to claim 1, wherein in the thickness direction of the negative electrode active material layer, a region other than the first region is a second region, the secondary battery satisfying $1 \leq m2/n2 \leq 5$ and $40\% \leq m2 \leq 70\%$, wherein m2 represents a proportion of graphite particles in the second region, with a longest diameter of the graphite particle having an included angle of 0° to 20° with the direction of the negative electrode current collector, and n2 represents a cross-sectional porosity of the second region.

6. The secondary battery according to claim 5, wherein the secondary battery satisfies at least one of the following condition (7) or (8):

$$(7)\ 2 \leq m2/n2 \leq 4;\ \text{or}$$

$$(8)\ 45\% \leq m2 \leq 65\%.$$

7. The secondary battery according to claim 5 or 6, wherein the secondary battery satisfies at least one of the following condition (9) or (10):

$$(9)\ 10\% \leq n2 \leq 50\%;\ \text{or}$$

(10) the longest diameter of the graphite particle in the second region is 5 $\mu$m to 25 $\mu$m.

8. The secondary battery according to claim 5 or 6, wherein the secondary battery satisfies at least one of the following condition (11) or (12):

$$(11)\ 20\% \leq n2 \leq 40\%;\ \text{or}$$

(12) the longest diameter of the graphite particle in the second region is 5 $\mu$m to 20 $\mu$m.

9. The secondary battery according to claim 1, wherein the secondary battery satisfies at least one of the following conditions (a) to (d):

   (a) a longest diameter of the graphite particle in the negative electrode active material layer is 5 $\mu$m to 40 $\mu$m;
   (b) a compacted density of the negative electrode active material layer is 1.0 g/cm$^3$ to 1.5 g/cm$^3$;
   (c) a single-sided thickness of the negative electrode active material layer is 30 $\mu$m to 80 $\mu$m; or
   (d) a single-sided weight of the negative electrode active material layer is 0.03 mg/mm$^2$ to 0.12 mg/mm$^2$.

10. The secondary battery according to claim 1, wherein the longest diameter of the graphite particle in the negative electrode active material layer is 5 $\mu$m to 30 $\mu$m.

11. The secondary battery according to claim 1, wherein the graphite comprises natural graphite.

12. The secondary battery according to claim 11, wherein the natural graphite satisfies at least one of the following conditions (e) to (h):

   (e) the natural graphite is primary particles;
   (f) $D_v50$ of the natural graphite is 4 $\mu$m to 25 $\mu$m;
   (g) a powder compacted density of the natural graphite is 1.7 g/cm$^3$ to 2.05 g/cm$^3$; or
   (h) a specific surface area of the natural graphite is 3 m$^2$/g to 6 m$^2$/g.

13. The secondary battery according to claim 1, wherein an electrolyte infiltration time of the negative electrode active material layer is $\leq$ 70s.

14. An electronic apparatus, comprising the secondary battery according to any one of claims 1 to 13.

FIG. 1

## INTERNATIONAL SEARCH REPORT

International application No.

**PCT/CN2022/104059**

**A. CLASSIFICATION OF SUBJECT MATTER**

H01M 4/133(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 负极, 阳极, 石墨, 集流, 集电, 夹角, 角度, 平行, 孔隙, batter+, cell?, anode, negative, electrode, graphite, current, collector?, angle?, parallel, porosity

**C. DOCUMENTS CONSIDERED TO BE RELEVANT**

| Category* | Citation of document, with indication, where appropriate, of the relevant passages | Relevant to claim No. |
|---|---|---|
| A | CN 103733390 A (TOYOTA MOTOR CORP.) 16 April 2014 (2014-04-16) description, paragraphs 11-22 | 1-14 |
| A | CN 113437293 A (NINGDE AMPEREX TECHNOLOGY LTD.) 24 September 2021 (2021-09-24) entire document | 1-14 |
| A | CN 103262306 A (ELIIY POWER CO., LTD.) 21 August 2013 (2013-08-21) entire document | 1-14 |
| A | JP 2015018663 A (TOYOTA INDUSTRIES CORP. et al.) 29 January 2015 (2015-01-29) entire document | 1-14 |
| A | JP 2013069579 A (TOYOTA JIDOSHA K. K.) 18 April 2013 (2013-04-18) entire document | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2022** | **04 January 2023** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
|---|
| **PCT/CN2022/104059** |

| Patent document cited in search report | | | Publication date (day/month/year) | Patent family member(s) | | | Publication date (day/month/year) |
|---|---|---|---|---|---|---|---|
| CN | 103733390 | A | 16 April 2014 | JP | WO2013018180 | A1 | 02 March 2015 |
| | | | | KR | 20140044914 | A | 15 April 2014 |
| | | | | US | 2014170487 | A1 | 19 June 2014 |
| | | | | WO | 2013018180 | A1 | 07 February 2013 |
| CN | 113437293 | A | 24 September 2021 | None | | | |
| CN | 103262306 | A | 21 August 2013 | KR | 20140040681 | A | 03 April 2014 |
| | | | | EP | 2654107 | A1 | 23 October 2013 |
| | | | | US | 2013266849 | A1 | 10 October 2013 |
| | | | | WO | 2012081553 | A1 | 21 June 2012 |
| | | | | CN | 104993114 | A | 21 October 2015 |
| | | | | JP | 2012129167 | A | 05 July 2012 |
| | | | | JP | 2012129168 | A | 05 July 2012 |
| | | | | JP | 2012129169 | A | 05 July 2012 |
| | | | | JP | 2012129170 | A | 05 July 2012 |
| JP | 2015018663 | A | 29 January 2015 | None | | | |
| JP | 2013069579 | A | 18 April 2013 | None | | | |

Form PCT/ISA/210 (patent family annex) (January 2015)